# EUROPEAN PATENT APPLICATION

(11) **EP 4 746 179 A1**
(43) Date of publication of application: **20.05.2026**
(21) Application number: 24910915.8
(22) Date of filing: 19.12.2024
(51) Int. Cl.: H01M 50/528, H01M 50/538

(54) **BATTERY AND CONNECTION METHOD**

(30) Priority: 25.12.2023 CN 202311798381; 25.12.2023 CN 202323550637 U
(71) Applicant: Eve Energy Co., Ltd., Huizhou, Guangdong 516006 (CN)
(72) Inventor: DENG, Leixin, Huizhou, Guangdong 516006 (CN); YI, Guiyong, Huizhou, Guangdong 516006 (CN); LIU, Mi, Huizhou, Guangdong 516006 (CN); SONG, Pengyuan, Huizhou, Guangdong 516006 (CN)
(74) Representative: Cabinet Beaumont
(86) International application number: PCT/CN2024/140558
(87) International publication number: WO 2025/139984

(57) **Abstract**

Provided are a battery and a connection method thereof. A battery includes a jelly roll and a housing. Multiple spaced negative tabs are arranged at one end of the jelly roll and the multiple negative tabs are bent separately and overlapped with each other to form a complete tab structure at the one end of the jelly roll. The jelly roll is disposed in the housing. The housing includes a bottom plate. The negative tabs are electrically connected to the bottom plate.

## Description

This application claims priority to Chinese Patent Application No. 202311798381.8 filed with the China National Intellectual Property Administration (CNIPA) on Dec. 25, 2023, the disclosure of which is incorporated herein by reference in its entirety.

### TECHNICAL FIELD

This application relates to the field of battery technology, for example, a battery and a connection method thereof.

### BACKGROUND

In a full-tab cylindrical battery, the negative electrode of a jelly roll is welded to a busbar through negative tabs, and the busbar is then welded to a steel housing such that the steel housing serves as a negative electrode.

### TECHNICAL PROBLEM

Using the busbar as a welding bridge between the negative tabs and the steel housing, the two-step welding process increases the welding costs and the internal resistance. Increased internal resistance reduces the current-carrying area of the full-tab cylindrical battery, resulting in a failure to meet the high-current charge and discharge requirements. The presence of the busbar limits the material area width on the positive and negative electrode sheets, reducing active material content on the positive and negative electrode sheets and preventing an increase in the capacity of the full-tab cylindrical battery.

### SUMMARY

This application provides a battery and a connection method thereof to increase the current-carrying area of the battery, meet the high-current charge and discharge requirements, and enhance the capacity of the battery.

A battery includes a jelly roll and a housing. Multiple spaced negative tabs are arranged at one end of the jelly roll and the multiple negative tabs are bent separately and overlapped with each other. The jelly roll is disposed in the housing. The housing includes a bottom plate. The negative tabs are electrically connected to the bottom plate.

A connection method is applied to the battery above. The connection method is configured to electrically connect the negative tabs of the jelly roll of the battery to the bottom plate of the housing of the battery. The connection method includes bending the multiple negative tabs separately and overlapping the multiple negative tabs; and electrically connecting the negative tabs to the bottom plate such that the housing serves as a negative electrode. During the electrical connection, in the jelly roll, a sum A1 of a thickness of a positive electrode sheet, thicknesses of separators, and a thickness of a negative electrode sheet and the height A2 of each negative tab satisfy a first preset connection condition; a width A3 of each negative tab and the height A2 of each negative tab satisfy a second preset connection condition; and a gap L1 between two adjacent negative tabs satisfies a third preset connection condition.

### BENEFICIAL EFFECTS

The beneficial effects of the application are as follows: the multiple spaced negative tabs are arranged at one end of the jelly roll and the multiple negative tabs are bent separately and overlapped with each other to form a complete tab structure on the negative end face of the jelly roll; the jelly roll is disposed in the housing, the negative tabs are electrically connected to the bottom plate of the housing, and the housing serves as the negative electrode. The direct electrical connection of the negative tabs to the housing eliminates the need for an electrical connection via the busbar. Compared with the two-step electrical connection process used in the related art, the number of electrical connections is reduced to one, and the electrical connection costs can be reduced also. The direct electrical connection of the negative tabs to the housing increases the electrical connection area between the negative tabs and the bottom plate, and reduces the internal resistance of one electrical connection and the internal resistance of the busbar, thereby implementing a lower overall internal resistance of the battery, and then increasing the current-carrying area of the battery and satisfying the high-current charge and discharge requirements. Moreover, elimination of the busbar from the housing increases the available space between the negative tabs and the bottom plate, allowing for a wider material area on the positive electrode sheet and the negative electrode sheet. This increases the content of active material on the positive electrode sheet and the negative electrode sheet, thereby enhancing the capacity of the battery.

The connection method of this application is configured to electrically connect the negative tabs of the battery to the bottom plate of the housing directly. The method reduces the number of electrical connections, thereby implementing lower electrical connection costs. Additionally, during the electrical connection, it is required to satisfy the following three connection conditions: the sum A1 of the thickness of the positive electrode sheet, the thicknesses of the separators, and the thickness of the negative electrode sheet and the height A2 of each negative tab satisfy the first preset connection condition; the width A3 of each negative tab and the height A2 of each negative tab satisfy the second preset connection condition; and the gap L1 between two adjacent negative tabs satisfies the third preset connection condition. These conditions, when satisfied, ensure the electrical connectivity between the negative tabs and the bottom plate, reducing the likelihood of failed connections and thus ensuring the smooth electrical connection of the negative tabs to the bottom plate.

### BRIEF DESCRIPTION OF THE DRAWINGS

FIG. 1 is a structure diagram of a battery according to an embodiment of this application.
FIG. 2 is a structure diagram of a wound negative electrode sheet according to an embodiment of this application.
FIG. 3 is a structure diagram of an unwound negative electrode sheet according to an embodiment of this application.
FIG. 4 is a structure diagram of a jelly roll according to an embodiment of this application.
FIG. 5 is a side view of a bottom plate according to an embodiment of this application.
FIG. 6 is a bottom view of a bottom plate according to an embodiment of this application.
FIG. 7 is a flowchart of a connection method according to an embodiment of this application.

### Reference list

1. jelly roll; 11. negative tab; 12. negative electrode sheet; 13. positive electrode sheet; 14. upper separator; 15. lower separator;
2. housing; 21. bottom plate

### DETAILED DESCRIPTION

All features disclosed in this specification or steps in all methods or processes disclosed in this specification can be combined in any manner, except for mutually exclusive features and/or steps.

Any feature disclosed in this specification, unless otherwise explicitly stated, can be replaced by other equivalent or functionally similar features. That is, unless otherwise explicitly stated, each feature represents an example among a series of equivalent or similar features. Throughout this specification, identical reference numerals indicate identical components.

The solution of this application is described hereinafter in conjunction with drawings and embodiments.

### Embodiment one

This embodiment provides a battery with a larger current-carrying area to meet the high-current charge and discharge requirements and increase the capacity of the battery. The battery is a cylindrical battery with a steel housing. In other embodiments, a prismatic battery or any other irregularly shaped battery can be used. The shape of the battery is not limited here.

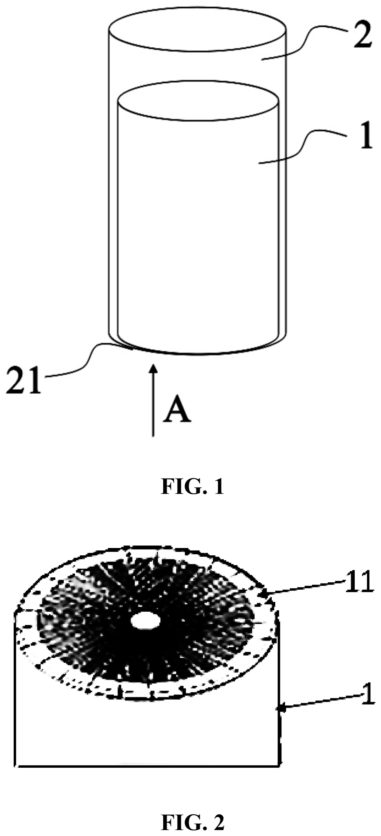

As shown in FIGS. 1 to 3, the battery includes a jelly roll 1 and a housing 2. Multiple spaced negative tabs 11 are disposed at one end of the jelly roll 1. The multiple negative tabs 11 are arranged in a spiral structure on the negative end face of the jelly roll 1. The negative tabs 11 are bent and attached to the negative end face of the jelly roll 1. In the two adjacent arc-shaped rings of the formed spiral structure, negative tabs 11 are overlapped with each other so that the negative tabs 11 are electrically connected to each other to form a complete tab structure on the negative end face of the jelly roll 1, thereby enhancing the battery power and facilitating the subsequent electrical connection between the negative tabs 11 and the housing 2. The jelly roll 1 is disposed in the housing 2. The housing 2 includes a bottom plate 21. The negative tabs 11 are electrically connected to the bottom plate 21. In the embodiment, the housing 2 is a cylindrical steel housing, and the electrical connection direction between the negative tabs 11 and the bottom plate 21 is shown by arrow A of FIG. 1.

In the embodiment, the negative tabs 11 are electrically connected to the bottom plate 21 by welding. In other embodiments, the negative tabs 11 may be electrically connected to the bottom plate 21 by rivets, screws, or conductive adhesives. The method of electrical connection is not limited here.

In the battery of the embodiment, the busbar is eliminated compared with the related art. The negative tabs 11 are welded to the bottom plate 21 of the housing 2 such that the housing 2 serves as the negative electrode. Due to elimination of the welding of the busbar, the number of the welding times is reduced to one. Compared with the two-step welding process in the related art, this reduces the welding costs, increases the welding area between the negative tabs 11 and the bottom plate 21, and reduces the internal resistance of one welding and the internal resistance of the busbar, resulting in a lower overall internal resistance of the battery. This increases the current-carrying area of the battery and meets the high-current charge and discharge requirements. Moreover, elimination of the busbar from the housing 2 increases the available space between the negative tabs 11 and the bottom plate 21, allowing for wider material areas on the positive electrode sheet 13 and the negative electrode sheet 12, which increases the content of active material on the positive electrode sheet 13 and the negative electrode sheet 12, thereby enhancing the capacity of the battery. The capacity of the battery is one of the key performance indicators for evaluating the battery performance. The capacity of the battery represents the amount of electricity released by the battery under certain conditions such as discharge rate, temperature, and cut-off voltage.

In the embodiment, the battery requires only a single welding operation to weld the negative tabs 11 to the housing 2. Compared with the two-step welding process in the related art where the negative tabs of the jelly roll are welded to the busbar and then the busbar is welded to the housing, the welding yield between the negative tabs 11 and the housing 2 in the embodiment is higher, thereby ensuring the welding effect between the negative tabs 11 and the housing 2.

In the embodiment, the material area widths on the positive electrode sheet 13 and the negative electrode sheet 12 are increased so that the content of active material on the positive electrode sheet 13 and the negative electrode sheet 12 is increased and the capacity of the battery is increased by 0.2%-0.6%. In addition, elimination of the busbar reduces one welding operation, so the internal resistance of the one welding is reduced by 3%-10% and also the internal resistance of the busbar is reduced by 0.1%-0.9%. That is, both the capacity and internal resistance of the battery in the embodiment are improved, which makes cost-effectiveness of the battery better. The material area width of the positive electrode sheet 13 or the negative electrode sheet 12 refers to the dimension, in the axial direction of the housing 2, of the material area on the positive electrode sheet 13 or the negative electrode sheet 12 where the active material is applied.

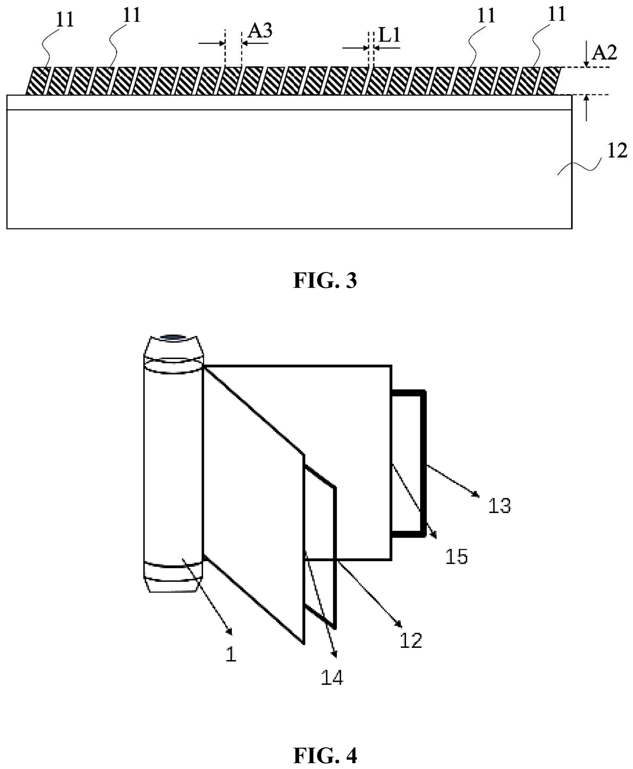

As shown in FIGS. 3 and 4, the jelly roll 1 includes a positive electrode sheet 13, separators (an upper separator 14 and a lower separator 15), and a negative electrode sheet 12 wound around each other. The negative tabs 11 are disposed at one end of the negative electrode sheet 12. The sum of the thickness of the positive electrode sheet 13, the thicknesses of the separators (the upper separator 14 and the lower separator 15), and the thickness of the negative electrode sheet 12 is A1. The height of each negative tab 11 is A2. A1 and A2 satisfy 0.05 ± 0.01 < A1/A2 < 0.1 ± 0.01 to ensure the weldability between the negative tabs 11 and the bottom plate 21. How to wind the positive electrode sheet 13, the separators (the upper separator 14 and the lower separator 15), and the negative electrode sheet 12 to form the jelly roll 1 is a common winding process in the related art and thus is not described here. In the embodiment, A1 and A2 satisfy 0.05 < A1/A2 < 0.1.

As shown in FIG. 3, the width of each negative tab 11 is A3. A2 and A3 satisfy 0.4 ± 0.05 < A3/A2 < 0.9 ± 0.05 to ensure the weldability between the negative tabs 11 and the bottom plate 21. In the embodiment, A2 and A3 satisfy 0.4 < A3/A2 < 0.9.

As shown in FIG. 3, the gap between two adjacent negative tabs 11 is L1. L1 satisfies L1 < 0.2 ± 0.05 mm to ensure the weldability between the negative tabs 11 and the bottom plate 21. In the embodiment, L1 satisfies L1 < 0.2 mm.

The parameters of the positive electrode sheet 13, the separators (the upper separator 14 and the lower separator 15), the negative electrode sheet 12, and the negative tabs 11 of the jelly roll 1 are set such that 0.05 ± 0.01 < A1/A2 < 0.1 ± 0.01, 0.4 ± 0.05 < A3/A4 < 0.9 ± 0.05, and L1 < 0.2 ± 0.05 mm. When the jelly roll 1 satisfies all the parameter settings, the weldability between the negative tabs 11 of the jelly roll 1 and the bottom plate 21 of the housing 2 can be ensured and the negative tabs 11 can be welded to the bottom plate 21.

The negative tabs 11 are welded to the bottom plate 21 by laser deep penetration welding. On one hand, such welding allows for a relatively deep welding depth in the welding area between the negative tabs 11 and the bottom plate 21, thereby ensuring the welding stability between the negative tabs 11 and the bottom plate 21. On the other hand, such welding makes the welding area smaller, thereby leaving sufficient weldable space on the bottom plate 21 of the housing 2 to ensure the welding of other components on the bottom plate 21.

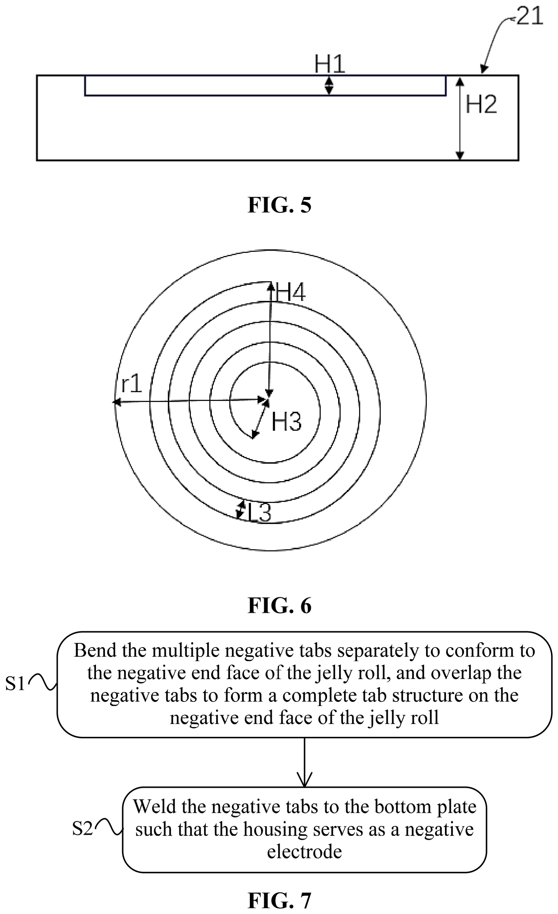

As shown in FIGS. 5 and 6, the welding area of the bottom plate 21 for the negative tabs 11 is arranged in a spiral line that matches the spiral structure, thereby ensuring that most of the negative tabs 11 can be welded to the bottom plate 21 and ensuring the welding stability between the bottom plate 21 and the negative tabs 11.

The welding depth of the welding area is H1. The thickness of the bottom plate 21 is H2. H1 and H2 satisfy 0.2 ± 0.05 < H1/H2 < 0.6 ± 0.05. In this manner, setting of the welding depth H1 and the thickness of the bottom plate 21 can ensure that the welding between the negative tabs 11 and the bottom plate 21 is more stable and secure. Moreover, this setting can also reduce the internal resistance of the spiral line and decrease heat generation, thereby increasing the current-carrying area of the battery. In the embodiment, H1 and H2 satisfy 0.2 < H1/H2 < 0.6.

The distance from the start point of the spiral line to the center of the jelly roll 1 is H3. The radius of the bottom plate 21 is r1. H3 and r1 satisfy H3 > r1 × 0.2. Additionally, the distance from the end point of the spiral line to the center of the jelly roll 1 is H4. H4 and r1 satisfy H4 < r1 × 0.85. This setting ensures that most of the negative tabs 11 can be welded to the bottom plate 21 and ensures the welding stability between the bottom plate 21 and the negative tabs 11.

The length of the spiral line is L2. The radius of the jelly roll 1 is r2. L2 and r2 satisfy L2 > r2 × 15.71 so that the spiral line is not too short, thereby ensuring that most of the negative tabs 11 can be welded to the bottom plate 21. At the same time, excessive internal resistance and high welding costs can be prevented caused by an overly long spiral line.

The pitch of the spiral line is L3. L3 satisfies 0.1 ± 0.01 mm < L3 < 0.5 ± 0.01 mm so that the pitch is appropriate under a fixed length of the spiral line, thereby ensuring the welding uniformity between the bottom plate 21 and the negative tabs 11, enabling the bottom plate 21 to be uniformly welded to most of the negative tabs 11, and avoiding welding that is either too dense or too sparse. The pitch of the spiral line refers to the distance between two adjacent turns of the spiral. In the embodiment, L3 satisfies 0.1 mm < L3 < 0.5 mm.

In the battery of the embodiment, the busbar is eliminated and the negative tabs 11 is welded to the bottom plate 21 of the housing 2 directly, thereby increasing the capacity of the battery and the current-carrying area and enabling the battery to meet the high-current charge and discharge requirements. In addition, the parameters of the positive electrode sheet 13, the separators (the upper separator 14 and the lower separator 15), the negative electrode sheet 12, and the negative tabs 11 of the jelly roll 1 are set to ensure the weldability between the tabs of the jelly roll 1 and the bottom plate 21. Moreover, the welding parameters of the welding method, the welding depth, the welding area, and the spiral line are set to ensure the welding stability between the negative tabs 11 and the bottom plate 21 and prevent the negative tabs 11 from detaching from the bottom plate 21.

That is, in the battery of the embodiment, the jelly roll 1 needs to satisfy the following three conditions: 0.05 ± 0.01 < A1/A2 < 0.1 ± 0.01, 0.4 ± 0.05 < A3/A4 < 0.9 ± 0.05, and L1 < 0.2 ± 0.05 mm, thereby ensuring the weldability between the negative tabs 11 of the formed jelly roll 1 and the bottom plate 21 of the housing 2. Moreover, the welding parameters are required to satisfy any one or more of the following six conditions: laser deep penetration welding is performed, 0.2 ± 0.05 < H1/H2 < 0.6 ± 0.05, the welding area is set as a spiral line matching the spiral structure, H3 > r1 × 0.2 and H4 < r1 × 0.85, L2 > r2 × 15.71, and 0.1 ± 0.01 mm < L3 < 0.5 ± 0.01 mm, thereby ensuring the welding stability between the negative tabs 11 and the bottom plate 21, preventing the negative tabs 11 from detaching from the bottom plate 21, and ensuring the overall performance of the battery.

### Embodiment two

In the embodiment, a connection method is provided based on the battery of embodiment one. The connection method is configured to weld the negative tabs 11 of the battery to the bottom plate 21 of the housing 2. As shown in FIG. 7, the connection method includes the following steps:

In S1, the negative tabs 11 arranged in the spiral structure are bent separately to conform to the negative end face of the jelly roll 1, where in the spiral structure, adjacent turns of negative tabs 11 overlap each other to form a complete tab structure on the negative end face of the jelly roll 1.

In S2, the negative tabs 11 are welded to the bottom plate 21 such that the housing 2 serves as a negative electrode.

During the welding, the sum A1 of the thickness of the positive electrode sheet 13, the thicknesses of the separators (the separator 14 and the separator 15), and the thickness of the negative electrode sheet 12 and the height A2 of each negative tab 11 satisfy a first preset connection condition; the width A3 of each negative tab 11 and the height A2 of each negative tab 11 satisfy a second preset connection condition; and a gap L1 between two adjacent negative tabs 11 satisfies a third preset connection condition. So the weldability between the negative tabs 11 and the bottom plate 21 can be ensured.

The first preset connection condition is 0.05 ± 0.01 < A1/A2 < 0.1 ± 0.01 as described in embodiment one, the second preset connection condition is 0.4 ± 0.05 < A3/A4 < 0.9 ± 0.05 as described in embodiment one, and the third preset connection condition is L1 < 0.2 ± 0.05 mm as described in embodiment one so that a jelly roll 1 satisfying the connection conditions can be formed, thereby enabling the negative tabs 11 of the jelly roll 1 to be welded to the bottom plate 21.

The connection method of the embodiment enables the negative tabs 11 to be directly welded to the bottom plate 21 of the housing 2 in a single welding process, resulting in fewer welding operations and lower welding costs. Moreover, since only one welding process is involved, a high welding yield between the negative tabs 11 and the bottom plate 21 can be ensured. In addition, the settings of the first preset connection condition, the second preset connection condition, and the third preset connection condition can ensure the weldability between the negative tabs 11 of the jelly roll 1 and the bottom plate 21.

## Claims

1. A battery, comprising:
a jelly roll (1), wherein a plurality of spaced negative tabs (11) are arranged at one end of the jelly roll (1), and the plurality of negative tabs (11) are bent and overlapped with each other; and
a housing (2), wherein the jelly roll (1) is disposed in the housing (2), the housing (2) comprises a bottom plate (21), and the plurality of negative tabs (11) are electrically connected to the bottom plate (21).

2. The battery of claim 1, wherein the jelly roll (1) comprises a positive electrode sheet (13), separators (14, 15), and a negative electrode sheet (12) wound around each other, and the plurality of negative tabs (11) are arranged at one end of the negative electrode sheet (12); and wherein a sum of a thickness of the positive electrode sheet (13), thickness of the separators (14, 15), and a thickness of the negative electrode sheet (12) is A1, a height of each of the plurality of negative tabs (11) is A2, and 0.05 ± 0.01 < A1/A2 < 0.1 ± 0.01.

3. The battery of claim 2, wherein a width of each of the plurality of negative tabs (11) is A3, and 0.4 ± 0.05 < A3/A2 < 0.9 ± 0.05.

4. The battery of any one of claims 1 to 3, wherein a gap between two adjacent negative tabs (11) of the plurality of negative tabs (11) is L1, and L1 < 0.2 ± 0.05 mm.

5. The battery of any one of claims 1 to 4, wherein the plurality of negative tabs (11) are electrically connected to the bottom plate (21) by laser deep penetration welding.

6. The battery of any one of claims 1 to 5, wherein an electrical connection area between the plurality of negative tabs (11) and the bottom plate (21) is configured as a spiral line, an electrical connection depth of the electrical connection area is H1, a thickness of the bottom plate (21) is H2, and 0.2 ± 0.05 < H1/H2 < 0.6 ± 0.05.

7. The battery of claim 6, wherein a distance from a start point of the spiral line to a center of the jelly roll (1) is H3, a radius of the bottom plate (21) is r1, and H3 > r1 × 0.2; a distance from an end point of the spiral line to the center of the jelly roll (1) is H4, and H4 < r1 × 0.85.

8. The battery of claim 6 or 7, wherein a length of the spiral line is L2, a radius of the jelly roll (1) is r2, and L2 > r2 × 15.71.

9. The battery of any one of claims 6 to 8, wherein a pitch of the spiral line is L3, and 0.1 ± 0.01 mm < L3 < 0.5 ± 0.01 mm.

10. A connection method, applied to the battery of any one of claims 1 to 9 and configured to electrically connect the plurality of negative tabs of the jelly roll of the battery to the bottom plate of the housing of the battery, and the connection method comprising:
bending the plurality of negative tabs separately and overlapping the plurality of negative tabs; and
electrically connecting the plurality of negative tabs to the bottom plate such that the housing serves as a negative electrode;
during the electrical connection, in the jelly roll, a sum A1 of a thickness of a positive electrode sheet, thickness of separators, and a thickness of a negative electrode sheet and a height A2 of each of the plurality of negative tabs satisfy a first preset connection condition; a width A3 of each of the plurality of negative tabs and the height A2 of each of the plurality of negative tabs satisfy a second preset connection condition; and a gap L1 between two adjacent negative tabs of the plurality of negative tabs satisfies a third preset connection condition.
